# EUROPÄISCHE PATENTSCHRIFT

(11) **EP 3 886 560 B1**
(45) Veröffentlichungstag und Bekanntmachung des Hinweises auf die Patenterteilung: **22.05.2024**
(21) Anmeldenummer: 19805230.0
(22) Anmeldetag: 14.11.2019
(51) Int. Cl.: A01C 17/00

(54) **VERFAHREN ZUM BESTIMMEN VON EIGENSCHAFTEN LANDWIRTSCHAFTLICHEN STREUGUTS**
METHOD OF DETERMINATION OF CHARACTERISTICS OF AGRICULTURAL SPREADING MATERIAL
PROCÉDÉ DE DÉTERMINATION DES PROPRIÉTÉS DE MATÉRIAU À ÉPANDRE AGRICOLE

(30) Priorität: 26.11.2018 DE 102018129711
(43) Veröffentlichungstag der Anmeldung: 06.10.2021
(73) Patentinhaber: Amazonen-Werke H. Dreyer GmbH & Co. KG, 49205 Hasbergen-Gaste (DE)
(72) Erfinder: RAHE, Florian, 49504 Lotte (DE); STRÖBEL-FRÖSCHLE, Markus, 49124 Georgsmarienhütte (DE)
(86) Internationale Anmeldenummer: PCT/EP2019/081268
(87) Internationale Veröffentlichungsnummer: WO 2020/109011

(56) Entgegenhaltungen:
- EP-A1- 3 087 817
- EP-A2- 2 924 417
- EP-B1- 2 923 546

## Beschreibung

Die Erfindung betrifft ein Verfahren zum Bestimmen von Eigenschaften landwirtschaftlichen Streuguts nach dem Oberbegriff des Patentanspruchs 1.

Vor dem Ausbringen von landwirtschaftlichem Streugut, wie etwa Dünger, auf eine landwirtschaftliche Nutzfläche sind an der zu verwendenden landwirtschaftlichen Streumaschine geeignete Einstellungen vorzunehmen, damit das beabsichtigte Streuergebnis bei der späteren Streugutausbringung auch umgesetzt wird. Die für den beabsichtigten Ausbringvorgang geeigneten Einstellparameter können dabei beispielsweise aus Streutabellen entnommen werden, welche einem Landwirt in gedruckter Form oder per Onlineabruf zur Verfügung gestellt werden. Die Verwendung entsprechender Streutabellen wird von Landwirten zunehmend als unkomfortabel und aufwendig wahrgenommen. Ferner sind die in den Streutabellen hinterlegten Daten oftmals auf Streuversuche unter Laborbedingungen zurückzuführen und berücksichtigen somit nicht die bei der Streugutausbringung tatsächlich vorliegenden Zustände.

Zur Vereinfachung des Einstellvorgangs und zur Berücksichtigung von tatsächlich vorliegenden Zuständen ist man dazu übergegangen, mobile Verfahren zur Ermittlung von Einstellempfehlungen für landwirtschaftliche Streumaschinen einzusetzen. Entsprechende mobile Verfahren werden üblicherweise unmittelbar vor dem geplanten Streuvorgang auf der landwirtschaftlichen Nutzfläche ausgeführt und liefern Daten, aus welchen Einstellempfehlungen für die landwirtschaftliche Streumaschine abgeleitet werden können.

Dabei ist es beispielsweise bekannt, Streugut mittels mehrerer auf der landwirtschaftlichen Nutzfläche positionierter Auffangeinrichtungen aufzufangen, wobei das aufzufangende Streugut von der landwirtschaftlichen Streumaschine ausgeworden wird. Nachfolgend wird die Verteilung des von den Auffangeinrichtungen aufgefangenen Streuguts mittels Bildauswertung ermittelt. Zur Bildauswertung kommen dabei üblicherweise mobile Endgeräte zum Einsatz, auf welchen entsprechende Anwendungen zur Ermittlung der Streugutverteilung installiert sind. Entsprechende Verfahren werden in den Druckschriften EP 2 923 546 B1, EP 2 924 417 A2, EP 3 087 817 A1 beschrieben.

Es hat sich gezeigt, dass die Eigenschaften von Streugut sich mit der Zeit verändern können, beispielsweise durch eine Umstellung des Herstellungsprozesses beim Streuguthersteller. Darüber hinaus können sich die Eigenschaften des Streuguts auch aufgrund von Umwelteinflüssen ändern. Beispielsweise kann die Streugutfeuchtigkeit einen erheblichen Einfluss auf die Flugeigenschaften des Streuguts haben. Außerdem kann sich die Korngröße und/oder die Kornform aufgrund von Transport- und/oder Lagerungsvorgängen ändern, sodass die Flugeigenschaften des Streuguts beeinflusst werden.

Die Aufgabe der vorliegenden Erfindung besteht somit darin, Streugutveränderungen feststellen zu können, damit diese bei der Ermittlung von Einstellempfehlungen von landwirtschaftlichen Streumaschinen berücksichtigt werden können.

Die Aufgabe wird gelöst durch ein Verfahren der eingangs genannten Art, wobei Eigenschaften einzelner Körner des Streuguts mittels Bildauswertung ermittelt werden.

Die Erfindung macht sich die Erkenntnis zunutze, dass auf einer landwirtschaftlichen Nutzfläche ausgelegte Auffangeinrichtungen nicht nur zum Ermitteln der Verteilung des aufgefangenen Streuguts Verwendung finden können, sondern es ebenfalls erlauben, Eigenschaften einzelner Körner des Streuguts zu ermitteln. Auf Grundlage der ermittelten Eigenschaften der einzelnen Körner des Streuguts kann beispielsweise eine von einem Landwirt zur Verfügung gestellte Sorteninformation überprüft werden. Beispielsweise kann auch geprüft werden, ob die ermittelten Eigenschaften der Körner des Streuguts weiterhin den Eigenschaften entsprechen, auf deren Grundlage bisher Einstellempfehlungen für landwirtschaftliche Streumaschinen ermittelt wurden.

Ferner können auf Grundlage der ermittelten Eigenschaften der Körner des Streuguts Einstellempfehlungen für eine landwirtschaftliche Streumaschine für einen geplanten Streuvorgang ermittelt werden. Die Einstellempfehlungen können eine einzustellende Drehzahl zumindest einer Streuscheibe der landwirtschaftlichen Streumaschine und/oder einen einzustellenden Wert für den Aufgabepunkt des Streuguts auf die zumindest eine Streuscheibe der landwirtschaftlichen Streumaschine betreffen. Die Einstellempfehlungen können ferner die Wurfweite des Streuguts und/oder den Abwurfwinkel bzw. die Wurfrichtung des Streuguts betreffen. Die Einstellempfehlungen können auch die Öffnungsgröße, die Öffnungsform und/oder die Öffnungsposition einer Streugut-Zuführöffnung der landwirtschaftlichen Streumaschine betreffen. Wenn zur Ausbringung des Streuguts eine Streuscheibe mit einer oder mehreren Wurfschaufeln eingesetzt wird, können die Einstellempfehlungen die Schaufelposition, die Schaufelneigung, die Schaufelausrichtung und/oder die Schaufellänge der einen oder der mehreren Wurfschaufeln der Streuscheibe der landwirtschaftlichen Streumaschine betreffen. Wenn zur Ausbringung des Streuguts das Streugut über eine Zuführrutsche der landwirtschaftlichen Streumaschine geleitet wird, können die Einstellempfehlungen die Rutschenneigung, die Rutschenausrichtung und/der die Rutschenposition betreffen. Darüber hinaus können die Einstellempfehlungen die Streuscheibe und/oder deren Geometrie und/oder deren Wurfschaufeltyp betreffen.

In einer bevorzugten Ausführungsform des erfindungsgemäßen Verfahrens wird beim Ermitteln der Eigenschaften einzelner Körner des Streuguts das durch zumindest eine Auffangeinrichtung aufgefangene Streugut mittels Bildauswertung untersucht. Hierzu wird beispielsweise eine Bildaufnahme einer Auffangeinrichtung erzeugt, wobei das Erzeugen der Bildaufnahme beispielsweise mittels eines mobilen Endgeräts erfolgt. Die Bildaufnahme ist dabei beispielsweise ein Foto der Auffangeinrichtung, wobei auf dem Foto neben der Auffangeinrichtung auch einzelne Körner des Streuguts sichtbar sind.

Ferner ist ein erfindungsgemäßes Verfahren bevorzugt, bei welchem das Ermitteln der Eigenschaften einzelner Körner des Streuguts das Ermitteln der Korngröße einzelner Körner des Streuguts und/oder das Ermitteln eines Korngrößenspektrums einer Mehrzahl von Körnern des Streuguts umfasst. Das Ermitteln der Eigenschaften einzelner Körner des Streuguts kann alternativ oder zusätzlich das Ermitteln der Kornform einzelner Körner des Streuguts und/oder das Ermitteln eines Kornformspektrums einer Mehrzahl von Körnern des Streuguts umfassen. Auf Grundlage der Korngröße, des Korngrößenspektrums, der Kornform und/oder des Kornformspektrums kann beispielsweise die Streugutsorte ermittelt werden. Hierzu kann überprüft werden, ob zu der ermittelten Korngröße, dem ermittelten Korngrößenspektrum, der ermittelten Kornform und/oder dem ermittelten Kornformspektrum eine Streugutsorte in einer Streugutsortendatenbank hinterlegt ist. Das Ermitteln der Eigenschaften einzelner Körner des Streuguts umfasst vorzugsweise das Identifizieren einzelner Körner innerhalb einer Mehrzahl von Körnern des Streuguts. Insbesondere umfasst das Ermitteln der Korngröße, des Korngrößenspektrums, der Kornform und/oder des Kornformspektrums ein Vermessen einzelner Körner des Streuguts mittels Bildauswertung.

Darüber hinaus ist ein erfindungsgemäßes Verfahren vorteilhaft, bei welchem beim Ermitteln der Korngröße einzelner Körner des Streuguts und/oder beim Ermitteln des Korngrößenspektrums einer Mehrzahl von Körnern des Streuguts zumindest eine Auffangeinrichtung oder ein Bestandteil zumindest einer Auffangeinrichtung als Referenzgröße berücksichtigt wird. Beispielsweise umfasst die zumindest eine Auffangeinrichtung eine Referenzfläche, deren Maße bei der Ermittlung der Korngröße und/oder des Korngrößenspektrums berücksichtigt wird. Alternativ oder zusätzlich zu der Referenzfläche kann die zumindest eine Auffangeinrichtung auch ein Referenzobjekt umfassen, dessen Maße beim Ermitteln der Korngröße und/oder des Korngrößenspektrums berücksichtigt wird. Das Referenzobjekt kann beispielsweise eine Kante oder ein Kantenbereich der Auffangeinrichtung sein, wobei die Länge der Kante als Bezugsgröße beim Ermitteln der Korngröße und/oder des Korngrößenspektrums berücksichtigt wird.

In dem erfindungsgemäßen Verfahren umfasst das Ermitteln der Eigenschaften einzelner Körner des Streuguts das Ermitteln der Kornfarbe einzelner Körner des Streuguts mittels Bildauswertung und/oder das Ermitteln eines Kornfarbenspektrums einer Mehrzahl von Körnern des Streuguts und wahlweise zusätzlich das Ermitteln von Oberflächeneigenschaften einer Mehrzahl von Körnern des Streuguts. Auf Grundlage der Kornfarbe kann beispielsweise die Sorte des untersuchten Streuguts ermittelt werden. Hierzu kann überprüft werden, ob zu der ermittelten Kornfarbe eine Streugutsorte in einer Streugutsortendatenbank hinterlegt ist. Wenn mehrere unterschiedliche Kornfarben ermittelt werden, kann daraus abgeleitet werden, dass es sich bei dem Streugut um eine Streugutmischung, beispielsweise um eine Düngermischung handelt. Auf Grundlage der mehreren Kornfarben oder des Kornfarbenspektrums können dann die Bestandteile der Streugutmischung ermittelt werden. Im Rahmen der Ermittlung der Oberflächeneigenschaften können beispielsweise die Oberflächentextur und/oder Oberflächenbeschädigungen erfasst werden. Wenn in diesem Zusammenhang Beschädigungen der Körneroberflächen festgestellt werden, kann dies auf unsachgemäße Transport- und/oder Umlagerungsvorgänge hinweisen.

In einer anderen Ausführungsform des erfindungsgemäßen Verfahrens wird beim Ermitteln der Kornfarbe einzelner Körner des Streuguts und/oder beim Ermitteln des Kornfarbenspektrums einer Mehrzahl von Körnern des Streuguts zumindest eine Auffangeinrichtung oder ein Bestandteil zumindest einer Auffangeinrichtung als Referenzfarbe berücksichtigt. Beispielsweise ist die zumindest eine Auffangeinrichtung einfarbig ausgebildet, sodass die Farbe der Auffangeinrichtung als Referenzfarbe bei der Kornfarbenermittlung beziehungsweise der Ermittlung des Kornfarbenspektrums zugrunde gelegt werden kann. Alternativ oder zusätzlich kann die zumindest eine Auffangeinrichtung eine Referenzfläche aufweisen, wobei die Farbe der Referenzfläche beim Ermitteln der Kornfarbe beziehungsweise beim Ermitteln des Kornfarbenspektrums berücksichtigt wird.

Gemäß dem erfindungsgemäßen Verfahren wird eine Streugutsorte auf Grundlage der ermittelten Eigenschaften einzelner Körner des Streuguts ermittelt. Beim Ermitteln der Streugutsorte werden die ermittelten Kornfarben oder das ermittelte Kornfarbenspektrum berücksichtigt.

In einer anderen Ausführungsform des erfindungsgemäßen Verfahrens wird eine Streugutsorte auch auf Grundlage der ermittelten Verteilung des von der einen oder den mehreren Auffangeinrichtungen aufgefangenen Streuguts und/oder mittels Auswertung von erzeugtem Bildmaterial der Körner des Streuguts ermittelt. Beim Ermitteln der Streugutsorte können auch die ermittelten Korngrößen, das ermittelte Korngrößenspektrum, die ermittelten Kornformen, das ermittelte Kornformspektrum, und/oder die ermittelten Oberflächeneigenschaften berücksichtigt werden. Bei der Streugutsortenermittlung kann bereits eine der genannten Eigenschaften ausreichend sein, um das untersuchte Streugut mit einer vergleichsweise hohen Sicherheit einer Streugutsorte zuzuordnen. In anderen Fällen kann es notwendig sein, dass mehrere der genannten Streuguteigenschaften zur Streugutsortenermittlung berücksichtigt werden müssen.

In einer weiteren bevorzugten Ausführungsform des erfindungsgemäßen Verfahrens umfasst das Ermitteln der Streugutsorte das Ermitteln einer oder mehrerer Einzelstreugutsorten und/oder das Ermitteln einer mehrere Einzelstreugutsorten umfassenden Mischstreugutsorte. Beim Ermitteln einer Mischstreugutsorte kann es notwendig sein, dass die Verteilung des von der einen oder den mehreren Auffangeinrichtungen aufgefangenen Streuguts berücksichtigt wird. Dabei kann eine statistische Auswertung der unterschiedlichen Verteilungen der Körner der jeweiligen Einzelstreugutsorten an unterschiedlichen Positionen mit voneinander abweichendem Abstand zur landwirtschaftlichen Streumaschine in Querrichtung erfolgen.

Außerdem ist ein erfindungsgemäßes Verfahren vorteilhaft, bei welchem das Ermitteln der Streugutsorte das Senden der ermittelten Eigenschaften einzelner Körner des Streuguts und/oder der ermittelten Verteilung des von der einen oder den mehreren Auffangeinrichtungen aufgefangenen Streuguts an eine Auswerteeinrichtung, insbesondere von einem mobilen Endgerät, umfasst. Vorzugsweise umfasst das Ermitteln der Streugutsorte ebenfalls das Vergleichen der ermittelten Eigenschaften einzelner Körner des Streuguts und/oder der ermittelten Verteilung des von der einen oder den mehreren Auffangeinrichtungen aufgefangenen Streuguts mit entsprechenden Einträgen in einer Streugutsortendatenbank. Die Streugutsortendatenbank ist beispielsweise Bestandteil einer zentralen Computereinheit, auf welche das mobile Endgerät mittels einer geeigneten Anwendung zugreifen kann. Vorzugsweise sind in der Streugutsortendatenbank Eigenschaften einer Vielzahl von Streugutsorten hinterlegt, sodass auf Grundlage einer oder mehrerer durch Bildauswertung ermittelter Eigenschaften die Streugutsorte identifiziert werden. Nach der Identifikation der Streugutsorte können beispielsweise weitere Eigenschaften der Streugutsorte und/oder die Sortenbezeichnung von der Streugutsortendatenbank abgerufen werden.

In einer alternativen Ausführungsform des erfindungsgemäßen Verfahrens ist das eine oder sind die mehreren Auffangeinrichtungen jeweils als Auffangmatte ausgebildet und/oder weisen an einer Oberseite jeweils eine Mehrzahl von Fangelementen auf. Die Auffangeinrichtungen können beispielsweise als flexible Kunststoffmatten ausgebildet sein. Die Fangelemente können beispielsweise als Noppen, Fasern, Stäbchen oder dergleichen ausgebildet sein. Außerdem ist ein erfindungsgemäßes Verfahren vorteilhaft, bei welchem Bildmaterial für die Bildauswertung erzeugt wird, insbesondere mittels eines mobilen Endgeräts. Das Bildmaterial betrifft dabei vorzugsweise die eine oder die mehreren Auffangeinrichtungen samt dem aufgefangenen Streugut. Zum Erzeugen des Bildmaterials wird vorzugsweise eine Kamera des mobilen Endgeräts verwendet.

Nachfolgend werden bevorzugte Ausführungsformen der Erfindung unter Bezugnahme auf die beiliegenden Zeichnungen näher erläutert und beschrieben. Dabei zeigen:
- Fig. 1: Auffangeinrichtungen, welche im Rahmen des erfindungsgemäßen Verfahrens genutzt werden; und
- Fig. 2: die Ermittlung von Eigenschaften einzelner Streugutkörner im Rahmen des erfindungsgemäßen Verfahrens.

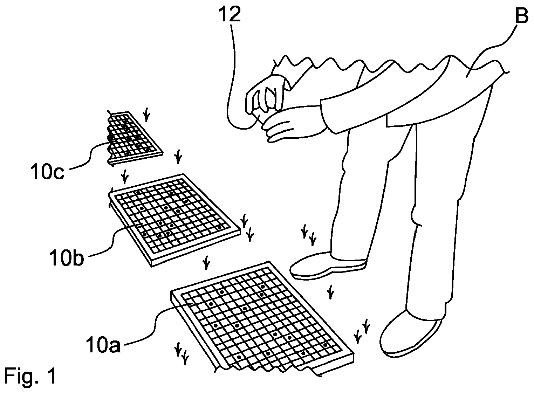

Die Fig. 1 zeigt einen Benutzer B, welcher ein als Smartphone ausgebildetes mobiles Endgerät 12 oberhalb einer Auffangeinrichtung 10a ausrichtet. Die Auffangeinrichtung 10a ist eine von mehreren Auffangeinrichtungen 10a-10c, welche vor einer Prüfausbringung von Streugut auf einer landwirtschaftlichen Nutzfläche positioniert worden sind. Die Auffangeinrichtungen 10a-10c sind jeweils als Auffangmatten ausgebildet und weisen auf einer Oberseite jeweils eine Mehrzahl von Fangelementen auf. Die Fangelemente können dabei beispielsweise als Noppen, Fasern, Stäbchen oder dergleichen ausgebildet sein. Bei der Prüfausbringung wurde Streugut von einer landwirtschaftlichen Streumaschine derart ausgeworden, dass das ausgeworfene Streugut teilweise von den auf der landwirtschaftlichen Nutzfläche positionierten Auffangeinrichtungen 10a-10c aufgefangen wurde.

Im Rahmen des Verfahrens zum Bestimmen von Eigenschaften des landwirtschaftlichen Streuguts wird zunächst Bildmaterial erzeugt, welches später zum Ermitteln von Eigenschaften einzelner Körner 18 des Streuguts ausgewertet wird. Das Erzeugen des Bildmaterials erfolgt mittels des mobilen Endgeräts 12. Auf dem mobilen Endgerät 12 ist eine Anwendung installiert, welche den Benutzer B bei der Erzeugung geeigneten Bildmaterials unterstützt. Im Rahmen der Bildmaterialerzeugung wird von jeder der auf der landwirtschaftlichen Nutzfläche positionierten Auffangeinrichtung 10a-10c nach der Prüfausbringung des Streuguts ein Bild mittels der Kamera des mobilen Endgeräts 12 aufgenommen. Folglich betrifft das erzeugte Bildmaterial die auf der landwirtschaftlichen Nutzfläche positionierten Auffangeinrichtungen 10a-10c samt dem von den Auffangeinrichtungen 10a-10c aufgefangenen Streugut.

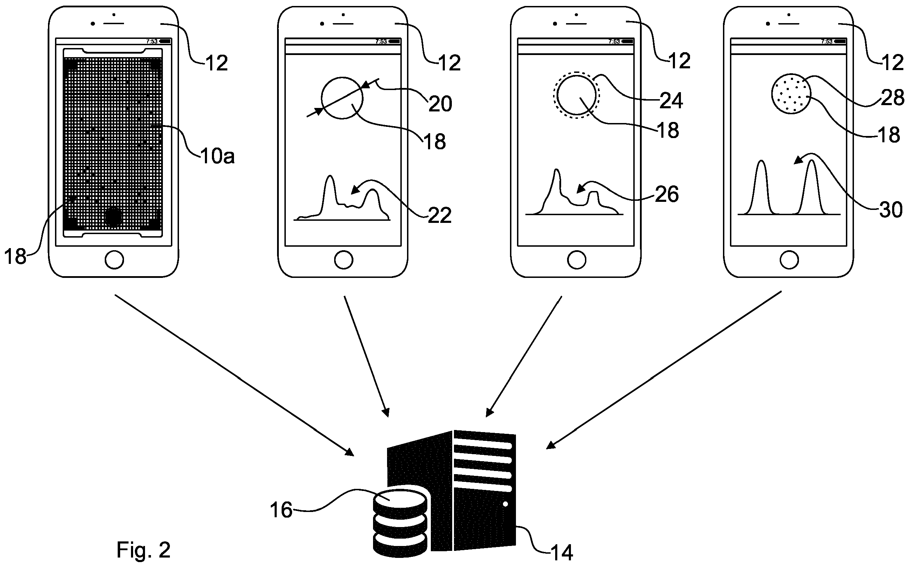

Die Fig. 2 zeigt das Ermitteln verschiedener Eigenschaften einzelner Körner 18 des von den Auffangeinrichtungen 10a-10c aufgefangenen Streuguts.

Ein dargestelltes mobiles Endgerät 12 zeigt beispielhaft eine mittels der Kamera des mobilen Endgeräts 12 aufgenommene Auffangeinrichtung 10a samt der von der Auffangeinrichtung 10a aufgefangenen Körner 18. Mittels einer Bildauswertung wird dann die Verteilung des von den Auffangeinrichtungen 10a-10c aufgefangenen Streuguts ermittelt. Dabei wird sowohl die Verteilung auf den einzelnen Auffangeinrichtungen 10a-10c als auch die Verteilung unter Berücksichtigung der Gesamtheit der Auffangeinrichtungen 10a-10c ermittelt. Die ermittelte Verteilung des von den Auffangeinrichtungen 10a-10c aufgefangenen Streuguts wird dann von dem mobilen Endgerät 12 an eine Auswerteeinrichtung 14 gesendet. Das Versenden erfolgt dabei beispielsweise unter Verwendung von Mobilfunk und/oder Internet.

Auf Grundlage des erzeugten Bildmaterials werden neben der Verteilung des von den Auffangeinrichtungen 10a-10c aufgefangenen Streuguts ebenfalls Eigenschaften einzelner Körner 18 des Streuguts ermittelt. Beim Ermitteln der Eigenschaften einzelner Körner 18 des Streuguts wird das von den Auffangeinrichtungen 10a-10c aufgefangene Streugut mittels Bildauswertung untersucht. Das Ermitteln der Streugutverteilung und das Ermitteln der Eigenschaften einzelner Körner 18 des Streuguts wird in dem dargestellten Ausführungsbeispiel auf dem mobilen Endgerät 12 durchgeführt. Alternativ oder zusätzlich kann das erzeugte Bildmaterial jedoch auch an die Auswerteeinrichtung 14 versendet werden, sodass das Ermitteln der Verteilung des Streuguts und/oder das Ermitteln der Eigenschaften einzelner Körner 18 des Streuguts durch die Auswerteeinrichtung 14 erfolgt. Die Auswerteeinrichtung 14 ist beispielsweise ein zentrales Computersystem, welches nach Art eines Servers betrieben wird. Die Auswerteeinrichtung 14 kann beispielsweise von einem Hersteller von landwirtschaftlichen Streumaschinen oder einem Drittanbieter betrieben werden. Vorzugsweise kann über eine geeignete Anwendung auf dem mobilen Endgerät 12 auf die Auswerteeinrichtung 14 zugegriffen werden, sodass eine Vielzahl von Benutzern auf die Auswerteeinrichtung 14 zugreifen kann.

Im Rahmen des Verfahrens werden die Korngrößen 20 einzelner Körner 18 des Streuguts mittels Bildauswertung ermittelt. Beim Ermitteln der Korngrößen 20 einzelner Körner 18 des Streuguts wird ein Bestandteil der jeweiligen Auffangeinrichtungen 10a-10c als Referenzgröße berücksichtigt. Auf Grundlage der ermittelten Korngrößen 20 kann somit ein Korngrößenspektrum 22 für eine Mehrzahl von Körnern 18 des Streuguts ermittelt werden. In dem dargestellten Beispiel zeigt das Korngrößenspektrum 22 zwei Schwerpunktbereiche, welchen ein Großteil der Korngrößen 20 zuzuordnen sind. Die ermittelten Korngrößen 20 sowie das ermittelte Korngrößenspektrum 22 werden von dem mobilen Endgerät 12 an die Auswerteeinrichtung 14 gesendet.

Im Rahmen des Verfahrens werden außerdem die Kornformen 24 einzelner Körner 18 des Streuguts mittels Bildauswertung ermittelt. Auf Grundlage der ermittelten Kornformen 24 kann dann ein Kornformspektrum 26 für eine Mehrzahl von Körnern 18 des Streuguts ermittelt werden. Das Kornformspektrum 26 weist zwei Schwerpunktbereiche auf, welchen ein Großteil der Kornformen 24 zuzuordnen sind. Die ermittelten Kornformen 24 sowie das Kornformspektrum 26 werden von dem mobilen Endgerät 12 an die Auswerteeinrichtung 14 gesendet.

Im Rahmen des Verfahrens werden außerdem die Kornfarben 28 einzelner Körner 18 des Streuguts mittels Bildauswertung ermittelt. Beim Ermitteln der Kornfarben 28 wird ein Bestandteil der jeweiligen Auffangeinrichtungen 10a-10c als Referenzfarbe berücksichtigt. Auf Grundlage der ermittelten Kornfarben 28 wird dann ein Kornfarbenspektrum 30 einer Mehrzahl von Körnern 18 des Streuguts ermittelt. Ergänzend zu den Kornfarben 28 können außerdem Oberflächeneigenschaften der Körner 18 des Streuguts ermittelt werden. Das Kornfarbenspektrum 30 weist zwei Schwerpunktbereiche auf, welchen ein Großteil der ermittelten Kornfarben 28 zuzuordnen sind. Die ermittelten Kornfarben 28 sowie das Kornfarbenspektrum 30 werden von dem mobilen Endgerät 12 an die Auswerteeinrichtung 14 gesendet.

Auf Grundlage der ermittelten Eigenschaften der einzelnen Körner 18 des Streuguts und der ermittelten Verteilung des von den Auffangeinrichtungen 10a-10c aufgefangenen Streuguts ermittelt die Auswerteeinrichtung 14 nun die Streugutsorte des untersuchten Streuguts. Im Rahmen der Streugutsortenermittlung erfolgt ein Vergleichen der ermittelten Eigenschaften einzelner Körner 18 des Streuguts und der ermittelten Verteilung des von den Auffangeinrichtungen 10a-10c aufgefangenen Streuguts mit entsprechenden Einträgen in einer Streugutsortendatenbank 16. In der Streugutsortendatenbank 16 sind Korn- und Verteileigenschaften einer Vielzahl von Streugutsorten hinterlegt. Durch einen Abgleich der im Rahmen der Bildauswertung ermittelten Korn- und Verteileigenschaften mit den Datenbankeinträgen kann somit die ausgebrachte Streugutsorte ermittelt werden.

In dem vorliegenden Beispiel handelt es sich bei dem ausgebrachten Streugut um eine Mischstreugutsorte. Auf Grundlage der Schwerpunktbereiche im Korngrößenspektrum 22, der Schwerpunktbereiche im Kornformspektrum 26 und der Schwerpunktbereiche im Kornfarbenspektrum 30 ermittelt die Auswerteeinrichtung 14 zunächst die Einzelstreugutsorten, welche in der Mischstreugutsorte enthalten sind. Ergänzend kann ein Mengenverhältnis der Einzelstreugutsorten ermittelt werden, um auf Grundlage der durch Bildauswertung ermittelten Eigenschaften die ausgebrachte Mischstreugutsorte identifizieren zu können. Die Sortenidentifikation kann auch eine statistische Auswertung der unterschiedlichen Verteilungen der Körner 18 der jeweiligen Einzelstreugutsorten auf den Auffangeinrichtungen 10a-10c umfassen.

Nach dem Ermitteln der Streugutsorte können die ermittelten Korn- und Verteileigenschaften der Streugutsorte in der Streugutsortendatenbank 16 gespeichert werden, damit diese bei späteren Bestimmungsvorgängen, beispielsweise durch andere Benutzer, berücksichtigt werden können.

### Bezugszeichen

- 10a-10c: Auffangeinrichtungen
- 12: mobiles Endgerät
- 14: Auswerteeinrichtung
- 16: Streugutsortendatenbank
- 18: Körner
- 20: Korngröße
- 22: Korngrößenspektrum
- 24: Kornform
- 26: Kornformspektrum
- 28: Kornfarbe
- 30: Kornfarbenspektrum

- B: Benutzer

## Patentansprüche

1. Verfahren zum Bestimmen von Eigenschaften landwirtschaftlichen Streuguts, mit den Schritten:
- Auffangen von Streugut mittels einer oder mehrerer Auffangeinrichtungen (10a-10c), wobei das aufzufangende Streugut von einer landwirtschaftlichen Streumaschine ausgeworfen wird; und
- Ermitteln der Verteilung des von der einen oder den mehreren Auffangeinrichtungen (10a-10c) aufgefangenen Streuguts mittels Bildauswertung;
**gekennzeichnet durch** die Schritte:
- Ermitteln von Eigenschaften einzelner Körner (18) des Streuguts mittels Bildauswertung;
- Ermitteln einer Streugutsorte auf Grundlage der ermittelten Eigenschaften einzelner Körner (18) des Streuguts;
wobei das Ermitteln der Eigenschaften einzelner Körner (18) des Streuguts zumindest einen der folgenden Schritte umfasst:
- Ermitteln der Kornfarbe (28) einzelner Körner (18) des Streuguts mittels Bildauswertung;
- Ermitteln eines Kornfarbenspektrums (30) einer Mehrzahl von Körnern (18) des Streuguts.

2. Verfahren nach Anspruch 1,
**dadurch gekennzeichnet, dass** beim Ermitteln der Eigenschaften einzelner Körner (18) des Streuguts das durch zumindest eine Auffangeinrichtung (10a-10c) aufgefangene Streugut mittels Bildauswertung untersucht wird.

3. Verfahren nach Anspruch 1 oder 2,
**dadurch gekennzeichnet, dass** das Ermitteln der Eigenschaften einzelner Körner (18) des Streuguts zumindest einen der folgenden Schritte umfasst:
- Ermitteln der Korngröße (20) einzelner Körner (18) des Streuguts;
- Ermitteln eines Korngrößenspektrums (22) einer Mehrzahl von Körnern (18) des Streuguts;
- Ermitteln der Kornform (24) einzelner Körner (18) des Streuguts;
- Ermitteln eines Kornformspektrums (26) einer Mehrzahl von Körnern (18) des Streuguts.

4. Verfahren nach Anspruch 3,
**dadurch gekennzeichnet, dass** beim Ermitteln der Korngröße (20) einzelner Körner (18) des Streuguts und/oder beim Ermitteln des Korngrößenspektrums (22) einer Mehrzahl von Körnern (18) des Streuguts zumindest eine Auffangeinrichtung (10a-10c) oder ein Bestandteil zumindest einer Auffangeinrichtung (10a-10c) als Referenzgröße berücksichtigt wird.

5. Verfahren nach einem der vorstehenden Ansprüche,
**dadurch gekennzeichnet, dass** das Ermitteln der Eigenschaften einzelner Körner (18) des Streuguts den folgenden Schritt umfasst:
Ermitteln von Oberflächeneigenschaften einer Mehrzahl von Körnern (18) des Streuguts.

6. Verfahren nach einem der vorstehenden Ansprüche,
**dadurch gekennzeichnet, dass** beim Ermitteln der Kornfarbe (28) einzelner Körner (18) des Streuguts und/oder beim Ermitteln des Kornfarbenspektrums (30) einer Mehrzahl von Körnern (18) des Streuguts zumindest eine Auffangeinrichtung (10a-10c) oder ein Bestandteil zumindest einer Auffangeinrichtung (10a-10c) als Referenzfarbe berücksichtigt wird.

7. Verfahren nach einem der vorstehenden Ansprüche,
**gekennzeichnet durch** den Schritt:
- Ermitteln einer Streugutsorte auf Grundlage der ermittelten Verteilung des von der einen oder den mehreren Auffangeinrichtungen (10a-10c) aufgefangenen Streuguts und/oder mittels Auswertung von erzeugtem Bildmaterial der Körner (18) des Streuguts.

8. Verfahren nach Anspruch 7,
**dadurch gekennzeichnet, dass** das Ermitteln der Streugutsorte zumindest einen der folgenden Schritte umfasst:
- Ermitteln einer oder mehrerer Einzelstreugutsorten;
- Ermitteln einer mehrere Einzelstreugutsorten umfassenden Mischstreugutsorte.

9. Verfahren nach Anspruch 7 oder 8,
**dadurch gekennzeichnet, dass** das Ermitteln der Streugutsorte zumindest einen der folgenden Schritte umfasst:
- Senden der ermittelten Eigenschaften einzelner Körner (18) des Streuguts und/oder der ermittelten Verteilung des von der einen oder den mehreren Auffangeinrichtungen (10a-10c) aufgefangenen Streuguts an eine Auswerteeinrichtung (14), insbesondere von einem mobilen Endgerät (12),
- Vergleichen der ermittelten Eigenschaften einzelner Körner (18) des Streuguts und/oder der ermittelten Verteilung des von der einen oder den mehreren Auffangeinrichtungen (10a-10c) aufgefangenen Streuguts mit entsprechenden Einträgen in einer Streugutsortendatenbank (16).

10. Verfahren nach einem der vorstehenden Ansprüche,
**dadurch gekennzeichnet, dass** das eine oder die mehreren Auffangeinrichtungen (10a-10c) jeweils als Auffangmatte ausgebildet sind und/oder an einer Oberseite jeweils eine Mehrzahl von Fangelementen aufweisen.

11. Verfahren nach einem der vorstehenden Ansprüche,
**gekennzeichnet durch** den Schritt:
- Erzeugen von Bildmaterial für eine Bildauswertung, insbesondere mittels eines mobilen Endgeräts (12), wobei das Bildmaterial vorzugsweise die eine oder die mehreren Auffangeinrichtungen (10a-10c) samt dem aufgefangenen Streugut betrifft.

## Claims

1. Method for determining the properties of agricultural spreading material, comprising the steps of:
- collecting spreading material by means of one or more collection devices (10a-10c), wherein the spreading material to be collected is ejected by an agricultural spreader, and
- determining the distribution of the spreading material collected by the one or more collection devices (10a-10c) by means of image evaluation;
**characterized by** the steps of:
- determining the properties of individual grains (18) of the spreading material by means of image evaluation;
- determining a spreading material type on the basis of the determined properties of individual grains (18) of the spreading material;
the determination of the properties of individual grains (18) of the spreading material comprising at least one of the following steps:
- determining the grain color (28) of individual grains (18) of the spreading material by means of image evaluation;
- determining a grain color spectrum (30) of a plurality of grains (18) of the spreading material.

2. Method according to claim 1,
**characterized in that,** when determining the properties of individual grains (18) of the spreading material, the spreading material collected by at least one collection device (10a-10c) is examined by means of image evaluation.

3. Method according to either claim 1 or claim 2,
**characterized in that** determining the properties of individual grains (18) of the spreading material comprises at least one of the following steps:
- determining the grain size (20) of individual grains (18) of the spreading material;
- determining a grain size spectrum (22) of a plurality of grains (18) of the spreading material;
- determining the grain shape (24) of individual grains (18) of the spreading material;
- determining a grain shape spectrum (26) of a plurality of grains (18) of the spreading material.

4. Method according to claim 3,
**characterized in that,** when determining the grain size (20) of individual grains (18) of the spreading material and/or when determining the grain size spectrum (22) of a plurality of grains (18) of the spreading material, at least one collection device (10a-10c) or a component of at least one collection device (10a-10c) is taken into account as a reference variable.

5. Method according to any of the preceding claims,
**characterized in that** determining the properties of individual grains (18) of the spreading material comprises the following step:
determining surface properties of a plurality of grains (18) of the spreading material.

6. Method according to any of the preceding claims,
**characterized in that,** when determining the grain color (28) of individual grains (18) of the spreading material and/or when determining the grain color spectrum (30) of a plurality of grains (18) of the spreading material, at least one collection device (10a-10c) or a component of at least one collection device (10a-10c) is taken into account as a reference color.

7. Method according to any of the preceding claims,
**characterized by** the step of:
- determining a spreading material type on the basis of the determined distribution of the spreading material collected by the one or more collection devices (10a-10c) and/or by evaluating generated image material of the grains (18) of the spreading material.

8. Method according to claim 7,
**characterized in that** determining the spreading material type comprises at least one of the following steps:
- determining one or more individual spreading material types;
- determining a mixed spreading material type comprising a plurality of individual spreading material types.

9. Method according to either claim 7 or claim 8,
**characterized in that** determining the spreading material type comprises at least one of the following steps:
- transmitting the determined properties of individual grains (18) of the spreading material and/or the determined distribution of the spreading material collected by the one or more collection devices (10a-10c) to an evaluation device (14), in particular of a mobile terminal (12),
- comparing the determined properties of individual grains (18) of the spreading material and/or the determined distribution of the spreading material collected by the one or more collection devices (10a-10c) with corresponding entries in a spreading material type database (16).

10. Method according to any of the preceding claims,
**characterized in that** the one or more collection devices (10a-10c) are each designed as a collection mat and/or each have a plurality of collection elements on an upper side.

11. Method according to any of the preceding claims,
**characterized by** the step of:
- generating image material for an image evaluation, in particular by means of a mobile terminal (12), the image material preferably relating to the one or more collection devices (10a-10c) together with the collected spreading material.

## Revendications

1. Procédé destiné à déterminer des propriétés d'un produit d'épandage agricole, comportant les étapes de :
- collecte du produit d'épandage à l'aide d'un ou de plusieurs dispositifs collecteurs (10a-10c), le produit d'épandage à collecter étant éjecté par une machine d'épandage agricole ; et
- détermination de la répartition du produit d'épandage collecté par l'un ou les plusieurs dispositifs collecteurs (10a-10c) à l'aide d'une analyse d'image ;
**caractérisé par** les étapes de :
- détermination de propriétés de grains (18) individuels du produit d'épandage à l'aide d'une analyse d'image ;
- détermination d'un type de produit d'épandage sur la base des propriétés déterminées de grains (18) individuels du produit d'épandage ;
la détermination des propriétés de grains (18) individuels du produit d'épandage comprenant au moins l'une des étapes suivantes :
- détermination de la couleur de grain (28) de grains (18) individuels du produit d'épandage à l'aide d'une analyse d'image ;
- détermination d'un spectre de couleurs de grain (30) d'une pluralité de grains (18) du produit d'épandage.

2. Procédé selon la revendication 1,
**caractérisé en ce que** lors de la détermination des propriétés de grains (18) individuels du produit d'épandage, le produit d'épandage collecté par au moins un dispositif collecteur (10a-10c) est analysé à l'aide d'une analyse d'image.

3. Procédé selon la revendication 1 ou 2,
**caractérisé en ce que** la détermination des propriétés de grains (18) individuels du produit d'épandage comprend au moins l'une des étapes suivantes :
- détermination de la grosseur de grain (20) de grains (18) individuels du produit d'épandage ;
- détermination d'un spectre de grosseurs de grain (22) d'une pluralité de grains (18) du produit d'épandage ;
- détermination de la forme de grain (24) de grains (18) individuels du produit d'épandage ;
- détermination d'un spectre de formes de grain (26) d'une pluralité de grains (18) du produit d'épandage.

4. Procédé selon la revendication 3,
**caractérisé en ce que** lors de la détermination de la grosseur de grain (20) de grains (18) individuels du produit d'épandage et/ou lors de la détermination du spectre de grosseurs de grain (22) d'une pluralité de grains (18) du produit d'épandage, au moins un dispositif collecteur (10a-10c) ou un élément d'au moins un dispositif collecteur (10a-10c) est considéré comme grandeur de référence.

5. Procédé selon l'une des revendications précédentes,
**caractérisé en ce que** la détermination des propriétés de grains (18) individuels du produit d'épandage comprend l'étape suivante :
détermination de propriétés de surface d'une pluralité de grains (18) du produit d'épandage.

6. Procédé selon l'une des revendications précédentes,
**caractérisé en ce que** lors de la détermination de la couleur de grain (28) de grains (18) individuels du produit d'épandage et/ou lors de la détermination du spectre de couleurs de grain (30) d'une pluralité de grains (18) du produit d'épandage, au moins un dispositif collecteur (10a-10c) ou un élément d'au moins un dispositif collecteur (10a-10c) est considéré comme couleur de référence.

7. Procédé selon l'une des revendications précédentes,
**caractérisé par** l'étape de :
- détermination d'un type de produit d'épandage sur la base de la répartition déterminée du produit d'épandage collecté par l'un ou les plusieurs dispositifs collecteurs (10a-10c) et/ou à l'aide d'une analyse de matériau d'image généré des grains (18) du produit d'épandage.

8. Procédé selon la revendication 7,
**caractérisé en ce que** la détermination du type de produit d'épandage comprend au moins l'une des étapes suivantes :
- détermination d'un ou de plusieurs types individuels de produit d'épandage ;
- détermination d'un type mixte de produit d'épandage comprenant plusieurs types individuels de produit d'épandage.

9. Procédé selon la revendication 7 ou 8,
**caractérisé en ce que** la détermination du type de produit d'épandage comprend au moins l'une des étapes suivantes :
- envoi des propriétés déterminées de grains (18) individuels du produit d'épandage et/ou de la répartition déterminée du produit d'épandage collecté par l'un ou les plusieurs dispositifs collecteurs (10a-10c) à un dispositif d'analyse (14), en particulier d'un terminal mobile (12),
- comparaison des propriétés déterminées de grains (18) individuels du produit d'épandage et/ou de la répartition déterminée du produit d'épandage collecté par l'un ou les plusieurs dispositifs collecteurs (10a-10c) avec des entrées correspondantes dans une base de données (16) de types de produit d'épandage.

10. Procédé selon l'une des revendications précédentes,
**caractérisé en ce que** l'un ou les plusieurs dispositifs collecteurs (10a-10c) sont respectivement conçus comme natte collectrice et/ou présentent, au niveau d'une face supérieure, respectivement une pluralité d'éléments de capture.

11. Procédé selon l'une des revendications précédentes,
**caractérisé par** l'étape de :
- génération de matériau d'image pour une analyse d'image, en particulier à l'aide d'un terminal mobile (12), le matériau d'image concernant de préférence l'un ou les plusieurs dispositifs collecteurs (10a-10c) avec le produit d'épandage collecté.
